# EUROPEAN PATENT SPECIFICATION

(11) **EP 0 473 527 B1**
(45) Date of publication and mention of the grant of the patent: **03.05.1995**
(21) Application number: 91500080.6
(22) Date of filing: 25.07.1991
(51) Int. Cl.: H04M 17/02, G07F 7/00, G07F 7/02

(54) **Modular public telephones credit cards validation and invoicing centre**
Validierungs- und Abrechnungszentrum für Kreditkarten, verwendet in modularen öffentlichen Fernsprechgeräten
Centre de validation et de facturation pour cartes de crédit utilisées dans des téléphones publics modulaires

(30) Priority: 28.08.1990 ES 9002285
(43) Date of publication of application: 04.03.1992
(73) Proprietor: TELEFONICA DE ESPANA, S.A., 28013 Madrid (ES)
(72) Inventor: Ibanez Palomeque, Francisco, E-28050 Madrid (ES); Mir Cepria, José, E-28013 Madrid (ES)
(74) Representative: Carpintero Lopez, Francisco

(56) References cited:
- BRITISH TELECOMMUNICATIONS ENGINEERING no. 9, July 1990, LONDON, GB , XP148985N. G.POPE 'The Cashless Services System'
- IEEE COMMUNICATIONS MAGAZINE vol. 22, no. 7, July 1984, NEW YORK, USA pages 26- 31 B. WEINSTEIN 'Merging Telecommunications needs of the Card Industry'
- IEEE INTERNATIONAL CONFERENCE ON COMMUNICATIONS 15 April 1990, ATLANTA, GA USA, pages 602 - 606, XP146133 L.R. BOWYER 'Intelligent Network Services for Dat Customers'

## Description

### OBJECT OF THE INVENTION

The present invention relates to a modular public telephones credit cards validation and invoicing centre designed to be incorporated in the modular public telephone management system to provide the credit card collection public telephone service with the necessary elements to validate and then invoice the same.

### FIELD OF THE INVENTION

The subject invention is applicable within the field of telecommunications, and in particular forms part of the infrastructure required for the new public telephone service, which allows calls to be made using a credit card inserted in the modular public telephone, to work properly.

### BACKGROUND TO THE INVENTION

Clearly, all validation and invoicing centres mainly designed to validate the sets to which they are connected, and to identify the user at all times, can be deemed to be background.

This can also be said of the cash dispenser system, which service likewise provides facilities for the use of credit cards.

The modular public telephones credit cards validation and invoicing centre is largely different from currently known systems since its integration within the modular public telephone management system vests it in certain special characteristics defined in accordance with the needs that arise when permitting the use of credit cards to make and collect telephone calls.

The service rendered within the context of various systems can connect with the management centres in credit organisations and the telephone company's management centre in order to carry out transactions using a standard protocol.

Furthermore, the validation and invoicing centre has a number of administrative functions that render it different from known systems, there being at present no system similar to this one that could be said to be ideal.

The modular public telephone management system envisages the existence of large management and performance blocks, to wit:
1.- Modular telephones (MT), these comprising intelligent public telephones that take coins, phonecards or credit cards as means of payment for the call.
2.- Validation and identification unit (VIU), designed to identify and authorize connection of the modular telephones to the switched telephone network, and to validate credit card call requests.
3.- Modular telephones adaptation unit (MTAU), dealing with the validation of credit transactions in respect of modular telephones that are not connected to the validation and identification unit.
4.- Modular telephone operating system (MTOS), dealing provincially with the centralization of alarms reported by modular telephones, validation and identification units and modular telephones adaptation units, and the generation of breakdown and repair reports, moreover issuing statistical reports and teleprogramming the modular telephones, validation and identification units and modular telephones adaptation units.

In order to supplement the reliability of the whole modular public telephone management system, it is deemed to be absolutely necessary to have a validation and invoicing centre (VIC) dealing with the nationwide validation of credit cards, keeping black and grey lists thereof, contemporaneously communicating with the card issuing centres.

There exists no known ideal validation and invoicing centre operating as above to supplement the reliability of the modular public telephone management system. A telephone system using a charge card or a credit card is disclosed in the article entitled "The Cashless Services System", by N.G. Pope and published in British Telecommunications Engineering, vol. 9, July 1990, pages 112-117.

### DESCRIPTION OF THE INVENTION

The modular public telephones credit cards validation and invoicing centre subject hereof is in actual fact a centre that basically deals with the validation of all credit cards used to pay for credit telephone calls made from a modular telephone, issuing invoices for such calls that are sent to the management centres of the credit organisations associated to the system and to the telephone company's management centre.

It also controls the maximum credit assigned to each card and other administrative and statistical management functions.

More specifically, the modular public telephones credit cards validation and invoicing centre, known as VIC, relies on a number of concepts providing as follows:
- Credit organisation, grouping and controlling procedures relating to the credit cards issued by a variable number of banking and lending agencies, which are the real issuers thereof.

These credit organisations furnish a number of basic data in respect of their credit cards, namely:
. Organisation identification number.
. Algorithm to validate their cards.
. Daily spending limit for each of them.
. Minimum cost of call.
. Expiry date of each card.

A credit organisation can have three different statuses in the system:
a.- Connected. Their cards can use the validation and invoicing centre and be validated and invoiced.
b.- Suspended. - Their cards cannot use the validation and invoicing centre, despite the fact that the centre has all the data required to validate the card and that this latter is valid, though the credit organisation will nevertheless be invoiced for calls made before its activity was suspended at the validation and invoicing centre.
c.- Disconnected. Their cards cannot be used at the validation and invoicing centre, invoicing of such credit organisation not being acceptable since no information is available thereon, nor is there a list of bins or a black list.

- Bin. A bin is defined as the first six characters in the identification of a credit card, identifying the bank issuing the same and used to identify the credit organisation managing such bin.

The Bin may have the following different statuses:
a.- Starting.- A Bin whose credit organisation has joined the validation and invoicing centre but whose full black list has not been received. No validations or invoicing are acceptable for cards with such a Bin.
b.- Valid. Bin cards can use the validation and invoicing centre, validations being made and invoices sent to the management centres of credit organisations.
c.- Suspended. No validations are made but invoices are acceptable for calls made prior to suspension.
d.- Disconnected. The Bin does not exist at the validation and invoicing centre, nor is its black list or any other Bin data available, and therefore neither validation nor invoicing is acceptable.

- List of Bins. To thoroughly control validity of the cards gaining access to the system, keeping a list of valid bins, which holds all information pertaining to each Bin, among which noteworthy is the identification of the credit organisation control ling this Bin's cards and the algorithms to assess the Bin and the Pin (personal identification number) that the cards in such Bin must fulfil.
- Black list, such being the name given to the database containing identifications for all credit cards to which the credit organisations have decided to grant no credit.

This black list contains all cards that cannot use the validation and invoicing centre's services despite the fact that its Bin and the credit organisation managing the same are associated thereto and that the card is valid according to the relevant validation algorithm.

Every month all cards that expire are automatically deleted from the black list, and, furthermore, if on including a card in the black list, the credit organisation fails to inform of the date of expiry, the validation and invoicing centre notes the expiry date to be the 48th month after the month of inclusion in the list.
- Rank, being a pair of identifiers for cards having the same Bin, the second identifier being larger than the first.
- List of ranks, designed to expedite the handling of sets of cards in the black list, making it possible to suspend credit to a whole series of cards under the same Bin, with a consecutive identification number, setting up a list of ranks.

The list of ranks will be a list of pairs of identifiers or cards so that any card listed in any of these ranks is deemed to be in the black list and cannot gain access to the validation and invoicing centre.
- Grey list, this being the database containing all the codes of credit cards that have carried out some transaction during the day in progress, moreover associating the spending.

Thus, the system uses the list of Bins to check whether the card used is valid, moreover checking whether or not it is in the black list.

If the call is accepted, the data pertaining to the card and invoicing thereof are included in the grey list.

On transferring the invoicing files with these data to the relevant management centre of the credit organisation and to the telephone company's management centre, as requested by these credit organisations, sets of cards will be deleted, using the list of ranks to such end.

Intercommunication between the modular public telephone validation and identification unit, the validation and invoicing centre and the various management centres of credit organisations takes place as follows:

The validation and invoicing centre is on the one hand connected to the modular public telephone validation and identification unit, and on the other also communicates with the management centres of credit organisations and with the management centre at the telephone company, such connections being made through X. 25, relying on a specific protocol therefor:
- The validation and identification unit sends the user card's identification data to the validation and invoicing centre.
- The centre validates these data and gets back to the validation and identification unit with an acceptance or rejection, likewise submitting, as appropriate, information on the credit available for the card that day.
- When the call is over, the validation and invoicing centre receives the invoicing particulars from the validation and identification unit.
- The data are processed by the validation and invoicing centre, and the validation and identification unit confirm receipt of the invoicing when the process is over, whereupon it deems connection with the validation and identification unit to be over.
- Daily, the validation and invoicing centre invoices each of the credit organisations associated to the service for the credit calls with cards managed by this organisation and ending in the previous 24 hours.
- The centre at the telephone company will also receive the invoicing for the other credit cards issuing organisations daily, since the telephone company must invoice the organisations issuing the said credit cards for the calls.
- Likewise daily, but off-peak, the validation and invoicing centre receives updates on the relevant black lists from the credit organisations.

Inter-centre exchange of information files relies on a standard protocol, as follows:
A.- This takes place through a switched logical channel on the IBERPAC X.25 network.
B.- Calls are made without any facility whatsoever, using 128 character packages, module=8 and level 3=7 window.
C.- When the issuer is the validation and invoicing centre, it shall make an attempt at sending every 15 minutes after 0 hours, making no more than 8 attempts. If transmission is not achieved, the information is transferred to a tape, and this latter is sent.
D.- The validation and invoicing centre only accepts one call per centre in each direction at all times.
E.- The centre sending the file takes all the initiative.
F.- There are no informative messages.
G.- The data elements are uniblock.

The protocol used comprises two types of elements, each of the message types in these elements having a suitably defined format:
- Control elements:
   . Sending of file begins, (MCD1P) question. Sent by the same issuer of the file to request the receiver to admit the file it is attempting to send, asking for an MCD1R reply.
   . Sending of file begins, (MCD1R) reply. Sent in reply to an MCD1P to advise the issuer of a file whether or not it is willing to receive the file.
   . Sending of file recovery, (MCD2P) question. Sent by the issuer of a file to reattempt the sending after transmission is cut off, seeking an MCD2R reply.
   . Sending of file recovery, (MCD2R) reply. Sent in reply to an MCD2P to advise the issuer of a file whether or not it is willing to continue receiving the file.
- Data elements:
   . Data message, (MDP) question. This message contains a fixed number of records of the file to be transmitted, and allows the data in the file to be sent.
   . Data message, (MDR) reply. This message allows the issuer of the file to know whether the receiver is receiving properly.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

Figure number 1.- Is a block diagram of the validation and invoicing centre subject hereof, with an overview of the functional units that make it up.

### PREFERRED EMBODIMENT OF THE INVENTION

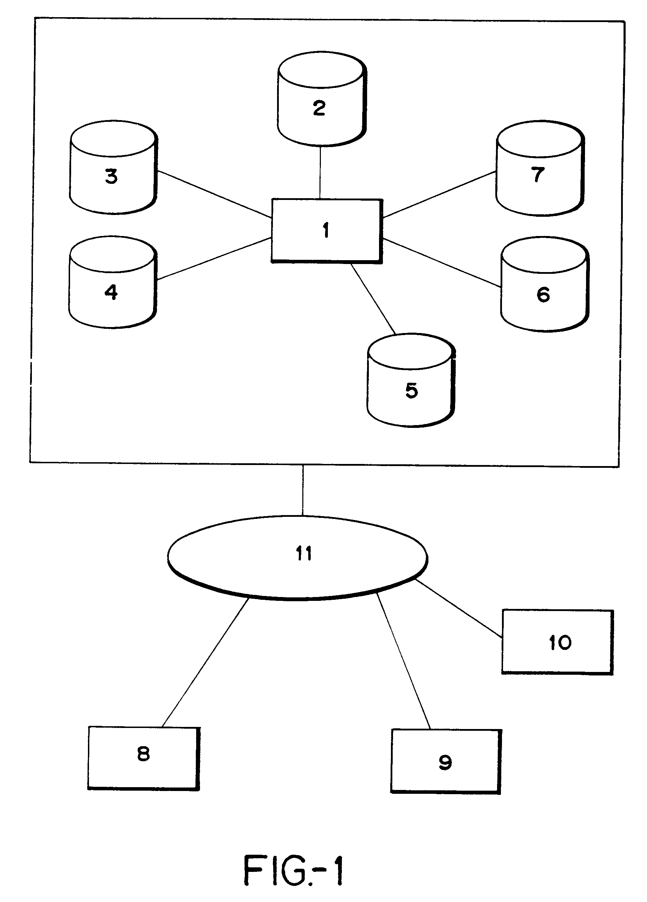

In light of the above description of the invention, and in view of figure 1, the validation and invoicing centre is a computer system comprising a processing unit (1) and various databases, of suitable communications output, found within the modular public telephone management system, whose functions involve a number of transactions and the administration or management of the actual system.

The transactions take place through X. 25, IBERPAC network (11), and involve validating the credit cards, invoicing the calls made, sending and receiving files to and from the management centres of credit organisations and the telephone company's management centre, in accordance with a specific protocol.

The system's administration functions are the following:
- Connection, disconnection, modification and suspension of a credit organisation.
- Request for inclusion, inclusion, modification and elimination of a Bin or of the data associated thereto.

The user's card and identification are validated in light of the list of Bins (5) and the list of ranks (3), as follows:
- On receiving the card data and the Pin as keyed in by the user (the Pin is optional) and sent by the validation and identification unit (8), the syntactical validity of the card is checked by verifying the number of characters in the telephone number, structure and length of the card track 2 (first character, separators, expiry, service code, specific card characters, final sentinel).
- It is checked that the card Bin is associated to the validation and invoicing centre, and that its status allows the validation of the cards thereof.
- It is checked that the credit organisation managing the card is in a status allowing its cards to be validated.
- The card track 2 is submitted to the validation algorithm associated to such Bin. This algorithm is requested by the credit organisation when including the Bin at the validation and invoicing centre. If the credit organisation includes processing of the card's Pin, such Pin is validated as indicated by the relevant validation algorithm.
- It is checked that the card is not in the black list (2), associated to the Bin or in one of the ranks that are not valid.

It is checked that the card user has not used up the daily credit the card has to make calls. This credit is chosen by the credit organisation on being connected to the validation and invoicing centre and is the same for all Bins managed by such company.
- If all the above conditions are met, the card is validated and the "credit available for the call" and "minimum cost per call " data are sent to the telephone.

The minimum cost per call is the same for all bins managed by the same credit organisation and the value thereof is chosen on being connected to the validation and invoicing centre, to be kept among a set of information pertaining to the credit organisation (7).

Once the credit call is validated in pursuance of the above procedure, invoicing takes place as follows:
- The syntactic validity of the message is verified by the source telephone, cost of the call, duration, telephone called and pulses.

The credit card track 2 is also used for validation purposes as in the previous validation transaction.
- If a repeat invoicing message is received, it is checked that the last call invoiced from the telephone from which the transaction is received is not the same being received.
- if invoicing has not been processed, the call ticket is written under the invoicing number of the card issuing organisation.
- If the invoicing was not previously recorded, the identification of the telephone from which invoicing is received and the data required to validate a possible reception are recorded in the database.
- The day's spending of that card is updated in the grey list (4).

Communication with the management centres of credit organisations and with the telephone company's management centre (10) for sending and receiving files is established by adapting a standard protocol, the formats of the messages within such protocol being as follows:
- Format of the elements: NETWORK/CONTROL/DATA.
   . NETWORK is the leader for X.25 levels 2 and 3.
   . CONTROL is the control leader for the files transmission procedure.
   . DATA are either the control elements data or the data elements file records data.
- Format of the elements control leader: FII/FRC/API/FMN/BN/RC/BIN1/BIN2/VC.
   . FII is the file issuer identifier.
   . FRC is the file receiver identifier.
   . API is the application identifier.
   . FMN is the file message number.
   . BN is the message block number.
   . RC is the rejection code.
   . BIN1 is the first indicators byte.
   . BIN2 is the second indicators byte.
   . VC is the version code.
- Format of the data elements, a transmission file record, containing the function to be performed:
   . Black list update.
   . Invoicing of credit transactions.
- Format of the control elements (MCD1P): CEC/FS/WS/FTO/LEADER, (MCD1R): CEC/AC/WS, (MCD2P): CEC/LEADER, and (MCD2R): CEC/AC.
   . CEC is the control element code.
   . FS is the file size.
   . WS is the window size.
   . FTO is the file transmission option.
   . AC is the acceptance code.
   . LEADER is the file leader, comprising the file date, file identification, file sequence number and record length, all in ASCII.

Among the validation and invoicing centre's administration functions are the following, as aforesaid:
- Connection of a credit organisation: to which end a credit organisation requesting connection to the validation and invoicing centre must include the following identification particulars:
   . Organisation's network identification.
   . Minimum cost per call.
   . Maximum daily credit.
   . Assessment of the size of the black list.
   . Means to be used to receive invoicing from the validation and invoicing centre.
   . List of Bins and associated data.
   . Algorithms of the Pins to be used for its Bins.
- Suspension of a credit organisation: the suspension of a credit organisation is a compulsory status prior to disconnecting such organisation from the validation and invoicing centre. It is acceptable for calls to be invoiced to such organisation, but cards managed by the same cannot be validated.
- Disconnection of a credit organisation: disconnection of an organisation means that the organisation will no longer have access to the system and that the Bins and the cards in the black list pertaining to such Bins will be deleted. This disconnection takes place automatically and over two stages:
   Suspension.
   Final disconnection.
- Modification of credit organisation data: the following data can be modified:
   . Maximum daily credit.
   . Minimum cost of call.
   . Invoicing procedure.
   . Organisation's network identification.
- Request for inclusion of Bins: for a Bin to be included, the credit organisation must include the following data:
   . Bin number.
   . Validation algorithm that is to be associated to such Bin.
   . Validation algorithm for the Pin that is to be associated to such Bin.
   . Date after which the black list for the Bin is to be sent.
   . Date after which the Bin is to be included.
   . Number of cards in black list associated to the Bin.
- Elimination of a Bin: when a Bin is eliminated, this means that the Bin is no longer to be associated to the validation and invoicing centre.

Their customers' credit cards must not be valid for the validation and invoicing centre and their black list need no longer be kept.

Elimination of a Bin entails deletion thereof from the list of valid Bins and deletion of all the cards under this Bin from the black list.

If the credit organisation merely wishes to suspend access of the Bin customers to the validation and invoicing centre for the time being, it is sufficient to send a rank of the black list, including all the Bin's cards.
- Changing a Bin's validation algorithm:

Among the parameters identifying a Bin is the type of validation to be applied to the cards in such Bin, thereby for the validation and invoicing centre to allow the validation algorithm to be modified as requested by the credit organisation in due advance.
- Changing the status of a Bin: the possibility of changing the status of a Bin is offered to the validation and invoicing centre operator as a mode of intervention in the event of problems arising.
- Changing the credit organisation of a Bin: credit organisations appear before the validation and invoicing centres as agents for the bank associated thereto, but this relationship between the bank and the credit organisation can change, and the credit organisation associated to a BIN can therefore change.

The validation and invoicing centre allows the organisation managing the bank to be changed forthwith, following an operator request.

Access of this bank's customers to the validation and invoicing centre is at no time suspended, for it is deemed that the Bin's black list is still valid, though invoicing will exist for each of the credit organisations on the date of change.

We feel that the device has now been described at sufficient length for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

## Claims

1. Apparatus for validating and invoicing credit card call charging within a modular public telephones network including a plurality of modular public telephone validation and identification units, said apparatus comprising:
a network processing and communication unit,
means for storing data representing a list of organisation identifiers (Bins) for credit cards of differing credit card organisations, a list of subset identifiers for subsets (Ranks) of credit cards of a credit card organisation, a black list of credit card identifiers for individual credit cards that are not to be validated, and a grey list to control daily card expense and check that the highest maximum is not exceeded of individual credit cards that have calls charged against them that have yet to be invoiced to an associated credit card organisation,
means for validating a credit card call charging request from a modular public telephone validation and identification unit by;
(i) comparing data within said request identifying a particular credit card organisation with said list of organisations to detect if call charging requests form said particular credit card oganisation should be validated,
(ii) comparing data within said request identifying a particular subset of credit cards of said particular credit card organisation with said list of subsets to detect if call charging requests from said particular subset of credit cards should be validated,
(iii) comparing data within said request identifying a particular credit card with said black list to detect if call charging requests from said particular credit card should be validated, and
(iv) validating call charging requests that have been detected should be validated and updating said grey list,
means for communicating with said modular public telephone validation and identification unit to either permit validated call charging requests or prohibit invalidated call charging requests, and
means for compiling an invoice list of call charges resulting from permitted call charging requests included in said grey list in respect of each credit card organisation.

2. Apparatus according to claim 1, wherein said network processing and communication unit uses a standard communication protocol adapted to have a predetermined message structure for communication with management centres of said credit card organisations and with a management centre of a telephone company operating said modular public telephones network.

3. Apparatus according to any one of claims 1 and 2, wherein said list of organisations includes data for each credit card organisation indicating whether each said credit card organisation has a suspended status in which no new call charging request for that suspended credit card organisation are validated, but call charges already belonding to that suspended credit card organisation may be compiled into an invoice.

4. Apparatus according to any one of claims 1, 2 or 3, wherein said list of subsets includes data for each subset of credit cards indicating whether each said subset of credit cards has a suspended status in which no new call charging request for that suspended subset of credit cards are validated, but call charges already belonging to that suspended subset of credit cards may be compiled into an invoice.

5. A method of validating and invoicing credit card call charging within a modular public telephones network including a plurality of modular public telephone validation and identification units, said method comprising the steps of:
storing data representing a list of organisation identifiers (Bins) for credit cards of differing credit card organisations, a list of subset identifiers for subsets (Ranks) of credit cards of a credit card organisation, a black list of credit card identifiers for individual credit cards that are not to be validated, and a grey list of identifiers of individual credit cards that have calls charged against them that have yet to be invoiced to an associated credit card organisation,
validating a credit card call charging request from a modular public telephone validation and identification unit by:
(i) comparing data within said request identifying a particular credit card organisation with said list of organisations to detect if call charging requests form said particular credit card oganisation should be validated,
(ii) comparing data within said request identifying a particular subset of credit cards of said particular credit card organisation with said list of subsets to detect if call charging requests from said particular subset of credit cards should be validated,
(iii) comparing data within said request identifying a particular credit card with said black list and ranks list to detect if call charging requests from said particular credit card should be validated, and
(iv) validating call charging requests that have been detected should be validated and updating said grey list,
communicating with said modular public telephone validation and identification unit to either permit validated call charging requests or prohibit invalidated call charging requests, and
compiling an invoice list of call charges resulting from permitted call charging requests included in said grey list in respect of each credit card organisation.

## Patentansprüche

1. Gerät für die Gültigkeitsbestätigung und Fakturierung der Gebühren der innerhalb eines öffentlichen modularen Fernsprechnetzes an Hand von Kreditkarten geführten Gespräche, das eine Reihe von Einheiten zur Validierung und Identifikation der öffentlichen Modularfernsprecher umfasst und aus folgenden Teilen besteht:
aus einer Einheit für die Verarbeitung und den Anschluss an das Netz;
aus Mitteln für die Speicherung der Daten, welche eine Liste der Identifikationen der Organisationen (Abteile) für die Kreditkarten der verschiedenen, dieselben ausgebenden Banken, eine Liste der Identifikationen der Untergruppen (Rangordnungen) der Kreditkarten einer Organisation, eine schwarze Liste mit den Identifikationen der einzelnen Kreditkarten, welche nicht mehr als gültig bestätigt werden sollen, sowie eine graue Liste darstellen, mit der die täglichen Gebühren einer Kreditkarte kontrolliert werden und gleichzeitig überprüft wird, dass die Kreditkarte nicht den Höchstbetrag der einzelnen Kreditkarte, zu deren Lasten Gespräche geführt wurden, die der entsprechenden Organisation noch in Rechnung zu stellen sind, überschreitet,
aus Mitteln zur Bestätigung der Gültigkeit eines Antrags auf Belastung eines Ferngesprächs über Kreditkarte durch die Validierungs- und Identifikationseinheit für öffentliche Modularfernsprecher, die folgende Aufgaben übernehmen:
(i) Die Antragsdaten, welche eine bestimmte Kreditorganisation identifizieren, mit denen der Organisationsliste vergleichen um festzustellen, ob die Anträge dieser konkreten Kreditkartenorganisation auf Belastung der Ferngespräche angenommen werden können;
(ii) die Antragsdaten, welche eine bestimmte Untergruppe von Kreditkarten dieser Organisation identifizieren, mit denen der Untergruppenliste vergleichen um festzustellen, ob die Anträge dieser konkreten Untergruppe von Kreditkarten auf Belastung der Ferngespräche angenommen werden können;
(iii) die Antragsdaten, welche eine bestimmte Kreditkarte identifizieren, mit denen der genannten schwarzen Liste vergleichen um festzustellen, ob die Anträge dieser konkreten Kreditkarte auf Belastung der Ferngespräche angenommen werden können;
(iv) die Anträge auf belastung von Gesprächen, die in Übereinstimmung mit den Feststellungen validiert werden müssen, für gültig erklären und die genannte graue Liste aktualisieren;
aus Mitteln für die Kommunikation mit der Validierungs- und Identifikationseinheit für öffentliche Modularfernsprecher, um die Anträge auf Belastung der für gültig erklärten Ferngespräche zuzulassen oder die Anträge auf Belastung der nicht für gültig erklärten Ferngespräche zurückzuweisen;
aus Mitteln für die Ausstellung einer Liste über die Fakturierung der zugelassenen und Ferngespräche, deren Belastung beantragt wurde und welche in Bezug auf jede Kreditkartenorganisation in der grauen Liste enthalten sind.

2. Gerät nach Anspruch 1 dadurch gekennzeichnet, dass die genannte Einheit für die Verarbeitung und den Anschluss an das Netz ein Standard-Kommunikationsprotokoll benutzt, das angerpasst wird, um eine bestimmte Meldungsstruktur für die Kommunikation mit den Verwaltungszentralen der Kreditkartenorganisationen und der Verwaltungszentrale der Telephongesellschaft, welche das benannte öffentliche Modularfernsprechnetz bedient, zu erhalten.

3. Gerät, nach einem der Ansprüche 1 und 2 dadurch gekennzeichnet, dass die Liste der Organisationen Daten für jede Kreditkartenorganisation enthält, welche angeben, ob sich die einzelnen Organisationen in einem Aufhebungszustand befinden, in dem die neuen Anträge auf Belastung der Gespräche für die aufgehobene Organisation nicht validiert werden, jedoch die Rechnung für die bis dahin geführten Ferngespräche, welche dieser Organisation entsprechen, ausgestellt wird.

4. Gerät nach einem der vorstehenden Ansprüche 1, 2 oder 3, dadurch gekennzeichnet, dass die genannte Liste der Untergruppen Daten für jede Kreditkarten-Untergruppe enthält, welche angeben, ob sich die einzelnen Kreditkarten-Untergruppen in einem Aufhebungszustand befinden, in dem die neuen Anträge auf Belastung der Gespräche für die aufgehobene Untergruppe nicht mehr validiert werden, jedoch die Rechnung für die bis dahin geführten Ferngespräche, welche dieser Untergruppe entsprechen, ausgestellt wird.

5. Verfahren zur Gültigkeitsbestätigung und Fakturierung der GebÜhren der mit Kreditkarten innerhalb eines öffentlichen Modularfernsprechnetzes geführten Gespräche, das eine Reihe von Validierungs- und Identifikationseinheiten für öffentliche Modularfernsprecher aufweist und folgende Schritte umfasst:
Speicherung der Daten, welche eine Liste der Organisationsidentifikationen (Abteile) für Kreditkarten verschiedener Organisationen, eine Liste der Untergruppenindentifikationen (Rangordnungen) der Kreditkarten einer Organisation, eine schwarze Liste der Identifikationen der einzelnen Kreditkarten, die nicht validiert werden dürfen, sowie eine graue Liste der Identifikationen der einzelnen Kreditkarten, die mit GebÜhren belastet sind, die der entsprechenden Kreditkarten-Organisation noch in Rechnung gestellt werden müssen, darstellen,
Bestätigung der Gültigkeit eines Antrags auf Belastung der Gespräche mittels Kreditkarte, welcher von einer Validierungs- und Identifikationseinheit für öffentliche Modularfernsprecher gestellt wird, in folgender Weise:
(i) Vergleich der Antragsdaten, welche eine bestimmte Kreditorganisation identifizieren, mit denen der Organisationsliste um festzustellen, ob die Anträge dieser konkreten Kreditkartenorganisation auf Belastung der Ferngespräche angenommen werden können;
(ii) Vergleich der Antragsdaten, welche eine bestimmte Untergruppe von Kreditkarten dieser Organisation identifizieren, mit denen der Untergruppenlisteum festzustellen, ob die Anträge dieser konkreten Untergruppe von Kreditkarten auf Belastung der Ferngespräche angenommen werden können;
(iii) Vergleich der Antragsdaten, welche eine bestimmte Kreditkarte identifizieren, mit denen der genannten schwarzen Liste um festzustellen, ob die Anträge dieser konkreten Kreditkarte auf Belastung der Ferngespräche angenommen werden können;
(iv) Validierung der Anträge auf Belastung von Gesprächen, die in Übereinstimmung mit den Feststellungen validiert werden müssen, und Aktualisierung der genannten graue Liste;
Kommunikation mit der Validierungs- und Identifikationseinheit für öffentliche Modularfernsprecher, um die Anträge auf Belastung der für gültig erklärten Ferngespräche zuzulassen oder die Anträge auf Belastung der nicht für gültig erklärten Ferngespräche zurückzuweisen und
Ausstellung einer Liste über die Fakturierung der zugelassenen und Ferngespräche, deren Belastung beantragt wurde und welche in Bezug auf jede Kreditkartenorganisation in der grauen Liste enthalten sind.

## Revendications

1. Appareil pour valider et facturer les débits d'appels avec des cartes de crédit dans un réseau de téléphones publics modulaires, lequel comporte une série d'unités de validation et identification des téléphones publics modulaires, cet appareil comprenant:
une unité de traitement et de communication avec le réseau;
des moyens pour emmagasiner les données qui représentent une liste d'identificateurs des organisations (compartiments) pour les cartes de crédit des différentes organisations de cartes de crédit, une liste d'identificateurs de sous-ensemble pour des sous-ensembles (catégories) de lettres de crédit d'une organisation de cartes de crédit, une liste noire d'identificateurs de cartes de crédit pour des cartes de crédit individuelles qui ne doivent pas être validées, et une liste grise pour contrôler les frais quotidiens d'une carte et vérifier qu'on ne dépasse pas le plafond de chaque carte de crédit individuelle qu'on a débitée d'appels qui restent à facturer à l'organisation correspondante de la carte de crédit;
des moyens pour valider une demande de débit d'un appel avec une carte de crédit, à partir d'une unité de validation et identification pour téléphones publics modulaires qui réalisent ce qui suit:
(i) comparer les données de cette demande, qui identifient une certaine organisation de cartes de crédit avec la liste des organisations citée plus haut, pour détecter s'il faut valider les demandes de débit d'appels provenant de cette organisation concrète de cartes de crédit;
(ii) comparer les données de cette demande, qui identifient un sous-ensemble déterminé de cartes de crédit de l'organisation en question de cartes de crédit avec la liste de sous-ensembles citée plus haut, pour détecter s'il faut valider les demandes de débit d'appels reçus de ce sous-ensemble concret de cartes de crédit;
(iii) comparer les données de cette demande, qui identifient une certaine carte de crédit avec la liste noire mentionnée plus haut, afin de détecter s'il faut valider les demandes de débit d'appels provenant de cette carte de crédit concrète;
(iv) et valider les demandes de débit d'appel qui, d'après ce qu'on a détecté, doivent être validées, et actualiser la liste grise mentionnée plus haut;
des moyens pour communiquer avec l'unité de validation et identification pour téléphones publics modulaires citée plus haut, afin de permettre les demandes de débit d'appels validées ou d'interdire les demandes de débit d'appels non validées;
des moyens pour préparer une liste de facturation des débits d'appels qui résultent des demandes de débit d'appels permises, incluses dans la liste grise citée plus haut, en rapport avec chaque organisation de cartes de crédit.

2. Appareil conforme à la revendication 1, qui est caractérisé par le fait que l'unité de traitement et de communication avec le réseau utilise un protocole standard de communication adapté, pour avoir une certaine structure de message pour la communication avec les centres de gestion des organisations de cartes de crédit et avec un centre de gestion d'une compagnie téléphonique qui organise le réseau des téléphones publics modulaires.

3. Appareil conforme à une quelconque des revendications 1 et 2, qui est caractérisé par le fait que la liste des organisations inclut des données pour chaque organisation de cartes de crédit, qui indiquent si elle se trouve dans un état de suspension, où les nouvelles demandes de débit d'appels ne sont pas validées pour elle, encore qu'on émette la facture des débits d'appels qui correspondaient au préalable à cette organisation suspendue de cartes de crédit.

4. Appareil conforme à une quelconque des revendications 1, 2 ou 3, qui est caractérisé par le fait que la liste de sous-ensembles inclut des données pour chaque sous-ensemble de cartes de crédit, qui indiquent s'il se trouve dans un état de suspension, où on ne valide aucune nouvelle pétition de débit d'appels pour lui, encore qu'on émette une facture pour les débits d'appels qui correspondaient déjà auparavant à ce sous-ensemble suspendu de cartes de crédit.

5. Procédé pour valider et facturer le débit d'appels avec des cartes de crédit, dans un réseau de téléphones publics modulaires, qui comporte une série d'unités de validation et identification pour des téléphones publics modulaires, ce procédé comprenant les étapes suivantes:
emmagasiner les données qui représentent une liste d'identificateurs d'organisation (compartiments) pour des cartes de crédit de différentes organisations de cartes de crédit, une liste d'identificateurs de sous-ensembles (catégories) de cartes de crédit d'une organisation de cartes de crédit, une liste noire d'identificateurs de cartes de crédit pour chaque carte de crédit individuelle qui ne doit pas être validée, et une liste grise d'identificateurs de cartes de crédit individuelles ayant des appels débités sur elles, qui doivent encore être facturés à l'organisation correspondante de cartes de crédit;
valider une demande de débit d'appel avec une carte de crédit reçue d'une unité de validation et identification pour téléphones publics modulaires, en suivant les étapes suivantes:
(i) comparer les données correspondant à cette demande, qui identifient une certaine organisation de cartes de crédit avec la liste d'organisations citée plus haut, pour détecter s'il faut valider les demandes de débit d'appels reçues de cette organisation concrète de cartes de crédit;
(ii) comparer les données de cette demande qui identifient un certain sous-ensemble de cartes de crédit de cette organisation de cartes de crédit avec la liste des sous-ensembles, pour détecter s'il faut valider les demandes de débit d'appels reçues de ce sous-ensemble concret de cartes de crédit;
(iii) comparer les données incluses dans cette demande, qui identifient une certaine carte de crédit avec la liste noire et la liste de catégories, pour détecter s'il faut valider les demandes de débit d'appels reçues de cette organisation concrète de cartes de crédit;
(iv) et valider les demandes de débit d'appels qu'on a détectées comme devant être validées, et actualiser la liste grise;
communiquer avec l'unité de validation et identification pour téléphones publics modulaires, afin de permettre les demandes de débit d'appel ayant été validées ou d'interdire les demandes de débit d'appels n'ayant pas été validées;
et préparer une liste de facturation des débits d'appels qui résultent des demandes permises de débit d'appels incluses dans la liste grise, en rapport avec chaque organisation de cartes de crédit.
